## Europäisches Patentamt

## European Patent Office

## Office européen des brevets

(19)

(11) Numéro de publication : **0 075 517**
**B1**

(12) **FASCICULE DE BREVET EUROPÉEN**

(45) Date de publication du fascicule du brevet :
**22.01.86**

(21) Numéro de dépôt : **82401707.3**

(22) Date de dépôt : **21.09.82**

(51) Int. Cl.⁴ : **G 01 B 15/02, G 01 N 23/06**

(54) **Dispositif de mesure non destructif de l'épaisseur de la paroi d'une pièce creuse.**

(30) Priorité : **23.09.81 FR 8117927**

(43) Date de publication de la demande :
**30.03.83 Bulletin 83/13**

(45) Mention de la délivrance du brevet :
**22.01.86 Bulletin 86/04**

(84) Etats contractants désignés :
**BE DE GB NL**

(56) Documents cités :
**FR-A- 1 320 483**
**FR-A- 1 424 611**
**US-A- 2 702 864**

(73) Titulaire : **COMMISSARIAT A L'ENERGIE ATOMIQUE
Etablissement de Caractère Scientifique Technique
et Industriel
31/33, rue de la Fédération
F-75015 Paris (FR)**

(72) Inventeur : **De Conto, Pierre
5, Impasse Chabrier
F-21800 Chevigny Saint Sauveur (FR)**
Inventeur : **Guipont, Raymond
37, Avenue Jean Jaurès
F-21150 Venarey-Les-Laumes (FR)**

(74) Mandataire : **Mongrédien, André et al
c/o BREVATOME 25, rue de Ponthieu
F-75008 Paris (FR)**

Jouve, 18, rue St-Denis, 75001 Paris, France

## Description

La présente invention a pour objet un dispositif de contrôle dimensionnel et non destructif d'une pièce creuse servant à la détermination de l'épaisseur de la paroi de cette pièce en chaque point de sa surface. Elle permet notamment d'effectuer des contrôles dimensionnels de pièces usinées et creuses dont la cavité est inaccessible à des moyens mécaniques traditionnels tels que des comparateurs ou capteurs de mesure.

Actuellement, ce type de contrôle dimensionnel d'une pièce creuse usinée est effectué à l'aide d'ultrasons. Etant donné que le temps de transit des ultrasons, de célérité déterminée, à travers la paroi d'une pièce est fonction de l'épaisseur de la paroi, la mesure de ce temps de transit permet, réciproquement, d'en déduire l'épaisseur de ladite paroi. Ce procédé de contrôle par ultrasons consiste tout d'abord à rechercher une vitesse moyenne de propagation des ultrasons dans la paroi de la pièce que l'on désire contrôler de façon à obtenir des valeurs de l'épaisseur de la paroi identiques à celles données par un moyen mécanique, (cette mesure s'effectuant sur une demi-pièce étalon du fait de l'inaccessibilité de la cavité au comparateur), puis à effectuer des mesures basées sur cette vitesse moyenne. Les erreurs sur l'épaisseur des pièces, résultant de cette méthode, sont relativement élevées, c'est-à-dire de ± 0,1 mm pour des pièces dont l'épaisseur est comprise entre 5 et 10 mm. Ceci est lié au fait que les procédés de fabrication d'une pièce entraînent des variations de structure d'une zone à l'autre de la pièce conduisant à une dispersion de la vitesse des ultrasons. La vitesse moyenne des ultrasons retenue n'est donc pas très significative dans les zones de la pièce où la dispersion de la vitesse est importante.

Ce procédé de contrôle par ultrasons, facile à mettre en œuvre et peu coûteux, permet dans la majorité des cas de déterminer l'épaisseur de la paroi d'une pièce usinée étant donné les tolérances d'épaisseur admises mais il ne peut être utilisé, à cause de la faible précision des mesures, pour des pièces devant servir d'étalons.

La présente invention a justement pour objet un dispositif de contrôle dimensionnel et non destructif d'une pièce creuse permettant de déterminer avec une meilleure précision que celle fournie par le procédé de contrôle par ultrasons, l'épaisseur de la paroi d'une telle pièce.

L'invention est basée sur l'analyse par absorptiométrie d'un rayonnement gamma. Cette analyse consiste en la mesure de la transmission, par un matériau, des rayonnements gamma issus de sources radioactives.

Si $I_0$ est l'intensité d'un faisceau gamma arrivant perpendiculairement sur un matériau absorbant d'épaisseur x et si $\mu$ est le coefficient d'absorption linéaire du matériau, l'intensité I du faisceau transmis par le matériau, c'est-à-dire l'intensité du faisceau qui n'a pas interagi avec le matériau lors de la traversée de celui-ci par le faisceau, est donnée par l'équation

$$I = I_0\, e^{-\mu x}$$

L'application de ce principe permet la mesure de l'épaisseur x du matériau suivant l'équation

$$x = \frac{1}{\mu}\, \ln \frac{I_0}{I}$$

La détermination de x est d'autant plus précise que le nombre de paramètres rattachés à la mesure est faible. En effet, $\mu$ est une constante pour un matériau et une énergie donnés et I et $I_0$ ne sont fonctions que de la distance existant entre la source et le détecteur.

On connaît des dispositifs tel que celui décrit dans le document FR-A-1 320 483, utilisant l'absorptiométrie d'un rayonnement gamma pour détecter des défauts de structure dans les parois d'un récipient.

On connaît aussi des dispositifs tel que celui décrit dans le document FR-A-1 424 611, permettant de vérifier l'épaisseur de parois d'articles creux par absorptiométrie d'un rayonnement bêta.

La présente invention a pour objet un dispositif pour déterminer de façon non destructive l'épaisseur d'une pièce creuse comprenant de façon connue des moyens permettant le maintien et le positionnement de la pièce, une source étant introduite à l'intérieur de la pièce de façon à émettre un rayonnement en direction de la surface interne de la paroi de cette pièce, un détecteur étant placé à l'extérieur de la pièce de façon à détecter le rayonnement susceptible de traverser la paroi de ladite pièce et des moyens permettant de réaliser un déplacement relatif entre l'ensemble, constitué de la source et du détecteur de rayonnement, et la pièce de façon à suivre le profil de la paroi de la pièce. Il se caractérise en ce que le rayonnement est un rayonnement gamma et en ce que la pièce à contrôler présentant en coupe une paroi ayant une première partie en arc de cercle, la source est maintenue au centre de cet arc de cercle et les moyens de déplacement comprennent des moyens permettant de déplacer le détecteur suivant un arc de cercle de plus grand rayon centré sur la source.

Ce dispositif de contrôle permet la détermination avec une grande précision de l'épaisseur de la paroi d'une pièce creuse étant donné que ce type de contrôle est indépendant des faibles variations de structure de la pièce que l'on contrôle.

Selon un mode préféré de réalisation du dispositif de l'invention, celui-ci comprend, de plus, des moyens permettant de fixer la distance entre le détecteur et la source, cette distance restant constante pendant tout le déplacement. Dans ce mode de réalisation, l'épaisseur x de la paroi de la pièce, ne dépend plus que du coefficient d'absor-

ption μ du matériau constituant la pièce à contrôler. La mesure de x peut donc être faite facilement et de façon très précise.

Selon un autre mode préféré de réalisation du dispositif de l'invention, le déplacement relatif entre ledit ensemble et la pièce à contrôler est effectué de façon que le rayonnement détecté soit constamment normal à la paroi de la pièce. De préférence, ce déplacement est réalisé pas à pas.

Selon un autre mode préféré de réalisation du dispositif de l'invention, la source est montée à l'extrémité d'une tige mobile parallèlement à elle-même et la paroi de la pièce à contrôler présentant par ailleurs en coupe une seconde partie rectiligne parallèle à la tige, les moyens de déplacement comprennent des moyens permettant de déplacer simultanément la source et le détecteur parallèlement à cette partie rectiligne.

Selon un autre mode préféré de réalisation du dispositif de l'invention, la tige supportant la source pouvant être déplacée entre une position de mesure et une position rétractée, un support de détecteur et des moyens permettant de solidariser automatiquement ce support et la tige lorsque celle-ci est en position de mesure sont prévus.

Selon un autre mode préféré de réalisation du dispositif de l'invention, le détecteur est un cristal de tellurure de cadmium.

Selon un autre mode préféré de réalisation du dispositif de l'invention, ce dispositif comprend, encore, des moyens permettant de commander de façon automatique les moyens permettant de réaliser le déplacement relatif entre ledit ensemble et la pièce à contrôler, ce déplacement étant réalisé pas à pas.

D'autres caractéristiques et avantages de la présente invention ressortiront mieux de la description qui va suivre, donnée à titre explicatif mais nullement limitatif, en référence aux figures annexées, sur lesquelles :

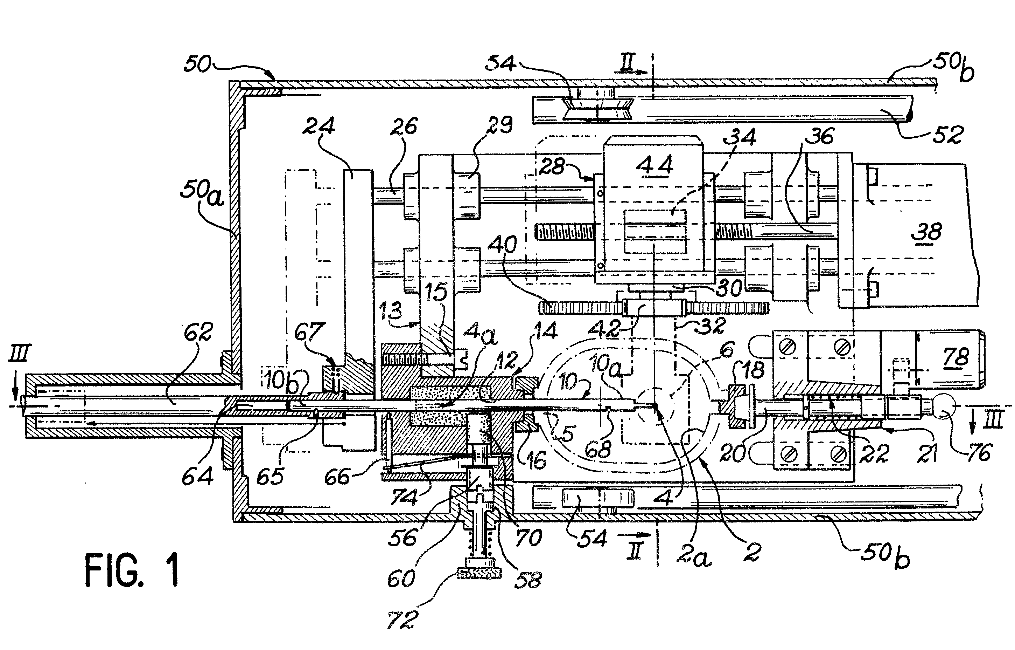

la figure 1 représente, schématiquement une vue de dessus, en coupe, du dispositif de contrôle selon l'invention ;

la figure 2 représente, schématiquement, une vue en coupe selon le plan II-II de la figure 1 ;

la figure 3 représente, schématiquement, une vue de côté et en coupe selon le plan III-III de la figure 1 ; et,

la figure 4 représente, schématiquement, une vue en perspective du dispositif de l'invention illustrant en particulier les moyens de commande et d'asservissement de ce dispositif.

En se référant aux différentes figures, le procédé de contrôle conformément à l'invention consiste à soumettre la surface interne 2a de la paroi d'une pièce creuse 2 à un rayonnement gamma émis par une source radioactive 4, par exemple de forme cylindrique, que l'on a introduit précédemment à l'intérieur de la pièce 2 par un orifice 5. Ce rayonnement gamma, après avoir traversé la paroi de la pièce, est ensuite détecté au moyen d'un détecteur 6 de préférence constitué d'un cristal de tellurure de cadmium et placé à l'extérieur de la pièce. L'ensemble constitué de la source et du détecteur peut être déplacé par rapport à la pièce de façon à suivre le profil de celle-ci. Le signal émis par le détecteur pour une zone donnée de la surface de la pièce est fonction de l'épaisseur de la paroi de la pièce creuse en cette même zone.

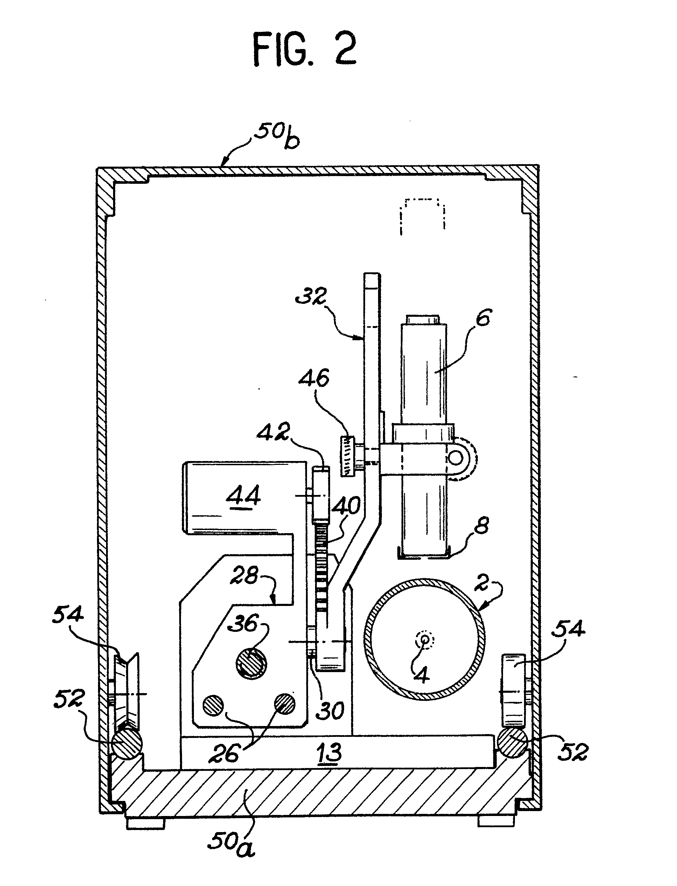

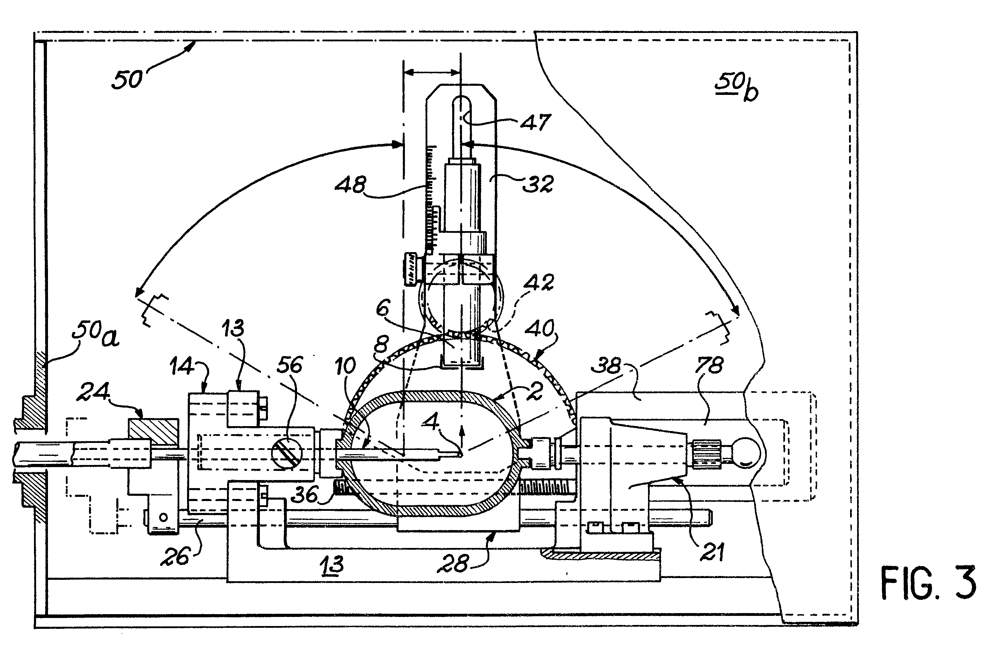

Afin de délimiter très précisément la zone de la pièce que l'on désire contrôler, et donc de déterminer en tout point de sa surface l'épaisseur de la paroi, le détecteur 6 peut être couplé à un collimateur 8 (figures 2 et 3) fixé sur le détecteur de façon à être placé entre le détecteur et la pièce à contrôler.

Par ailleurs, afin de déterminer de façon simple et avec précision l'épaisseur de la paroi de la pièce, dans une zone donnée, le déplacement de l'ensemble source-détecteur sera effectué de manière que le rayonnement gamma détecté soit constamment normal à la paroi de la pièce et de façon que la distance comprise entre la source et le détecteur reste constante pendant tout le temps de la mesure.

En effet, la détection du rayonnement gamma, bien qu'envisageable, suivant une direction oblique par rapport à la normale à la paroi de la pièce, nécessite d'apporter à la mesure des corrections pouvant conduire à une détermination de l'épaisseur de la zone que l'on contrôle avec une moins bonne précision.

De même, la détection du rayonnement gamma, bien qu'envisageable, avec une distance source-détecteur variable suivant les zones de la pièce que l'on contrôle, nécessite l'emploi d'un étalonnage pour chaque valeur de la distance source-détecteur pouvant entraîner des imprécisions sur la détermination de l'épaisseur de la paroi de la pièce. Cet étalonnage consiste à déterminer pour chaque mesure la valeur de l'intensité $I_0$ du faisceau gamma émis par la source. L'utilisation d'une distance source-détecteur constante pendant tout le contrôle de la pièce permet donc de simplifier ce contrôle, la détermination $I_0$ ne se faisant qu'une fois, et permet de déterminer avec une meilleure précision l'épaisseur de la paroi de la pièce puisque la mesure n'est plus que fonction du coefficient d'absorption du matériau constituant la pièce.

Comme représenté sur les figures, la source 4 est fixée à l'une des extrémités 10a d'une tige 10 pouvant coulisser dans un alésage 12 pratiqué dans un bloc blindé 14 amovible. Ce bloc 14 réalisé par exemple en plomb et pouvant être recouvert d'une couche d'acier est fixé sur un bâti 13 au moyen de vis telles que 15. La face de ce bloc 14 par laquelle sort l'extrémité 10a de la tige porte une pièce de centrage 16 sur laquelle vient s'appliquer l'une des extrémités de la pièce à contrôler. Le maintien en position mesure de la pièce, tel que représenté sur les figures, est réalisé au moyen d'une autre pièce de centrage 18 appliquée contre la pièce à contrôler par exemple au moyen d'une pièce cylindrique 20. Cette pièce 20 peut coulisser et tourner dans un alésage pratiqué dans un support 21 fixé sur le bâti 13. Cette pièce cylindrique 20 est sollicitée contre la pièce par un ressort de compression 22. La fixation du support 21 de la pièce cylindrique 20 sur le bâti 13 peut permettre de positionner ce support de façon réglable en fonction de la taille de la pièce.

L'autre extrémité 10b de la tige 10 portant la source 4 est montée sur un bras mobile 24 solidaire de deux colonnes de guidage 26 parallèles à la tige 10 et pouvant coulisser dans les paliers 29 du bâti 13. Les colonnes 26 portent un chariot 28 muni d'un axe 30 orthogonal aux colonnes 26 et sur lequel est montée une pièce 32 servant de support au détecteur 6.

Le déplacement du chariot 28 est commandé, pas à pas, par l'intermédiaire d'un écrou 34 monté sur celui-ci et dans lequel est reçue une tige filetée 36 pouvant être mise en rotation au moyen d'un moto-réducteur 38 porté par le bâti 13.

Le déplacement de l'ensemble constitué par le chariot 28, les colonnes 26, le bras 24 et la tige 10 permet de déplacer simultanément la source et le détecteur suivant deux droites parallèles à la direction définie par les colonnes 26. Ceci permet le contrôle de pièces présentant une paroi plane ou cylindrique. Par ailleurs, le déplacement simultané de la source et du détecteur permet de conserver une distance constante entre la source et le détecteur et de maintenir la source et le détecteur dans une position permettant la détection du rayonnement gamma transmis par la paroi suivant la normale à cette paroi.

Dans le cas d'une pièce présentant en coupe une paroi en arc de cercle, (pièce hémisphérique ou sphérique par exemple), le contrôle de la pièce se fait en maintenant au centre de cet arc de cercle la source 4 et en déplaçant le détecteur 6 suivant un arc de cercle de plus grand rayon centré sur la source. Ce déplacement est assuré par un secteur denté 40 (figure 3) fixé sur l'axe 30 et sur la pièce 32 et sur lequel vient s'engréner un pignon 42 mis en rotation pas à pas au moyen d'un moto-réducteur 44 porté par le chariot 28 (figure 2). L'axe du secteur denté 40 passe par la source 4 lorsqu'elle est en place dans la pièce.

Afin de permettre le réglage de la distance séparant la source du détecteur, ce dernier est fixé sur la pièce 32 au moyen d'une vis moletée 46 traversant une fente 47 formée dans la pièce 32. Afin de connaître cette distance, un curseur 48 peut être prévu sur la pièce 32.

L'ensemble du dispositif est contenu dans une enceinte 50 assurant la protection biologique du personnel. Cette enceinte est constituée d'une partie fixe 50a définissant deux faces de l'enceinte et d'une partie amovible 50b définissant les autres faces. Le bâti 13 est fixé sur l'une des faces de la partie fixe 50a comme l'illustrent les figures 2 et 3. La mobilité de la partie 50b est assurée au moyen de rails 52 portés par la partie fixe 50a sur lesquels roulent des galets 54 dont les axes sont solidaires de la partie amovible de l'enceinte. Dans la position de mesure (enceinte fermée), la partie amovible 50b est rendue solidaire de la partie fixe 50a au moyen d'un système, constitué d'une vis 56 montée sur le bloc blindé 14 et venant prendre place dans un évidement 58, pratiqué dans une partie renflée 60 de la partie amovible 50b.

Lorsqu'on désire effectuer des manutentions telles que la mise en place de la pièce à contrôler, la source 4 peut être escamotée dans la position 4a en rétractant la tige 10 dans le bloc 14, au moyen d'une tige 62 munie d'un alésage 64 dans lequel est enfilée la tige 10. Un système du type à bille 65 permet de rendre solidaire la tige 10 de la tige 62. La mise en place de la source en position de mesure est réalisée au moyen d'un système du type à billes 67 prévu entre la tige 62 et le bras 24.

Le maintien de la source en position escamotée 4a peut être assuré par exemple au moyen d'un ergot 66 coulissant dans le bloc 14 perpendiculairement à la tige 10 pour venir se positionner dans un cran 68 pratiqué dans la tige 10. En position escamotée de la source, la protection contre les rayonnements est assurée au moyen d'un bouchon 70 permettant d'obstruer l'alésage 12 du bloc 14. L'obstruction de cet alésage par le bouchon 70 est assurée par la vis 56 qui peut être vissée au moyen d'un outil du type tournevis 72 positionné dans l'évidement 58.

Par ailleurs, le vissage de cette vis assure la désolidarisation de la partie amovible 50b et de la partie fixe 50a de l'enceinte de protection ainsi que le positionnement de l'ergot 66 dans le cran 68 par action sur une lame de ressort antagoniste 74. Ce système empêche l'ouverture de l'enceinte lorsque la source est hors du bloc blindé 14.

On va maintenant décrire l'utilisation et le fonctionnement de ce dispositif de contrôle.

La première étape consiste à placer la pièce à étudier en position mesure. Bien entendu, ceci ne peut être effectué qu'après avoir ouvert l'enceinte, la source étant alors dans la position escamotée 4a. Etant donné que la source est radioactive, l'obstruction de l'alésage 12 par le bouchon 70 assure une protection biologique contre les rayonnements gamma qu'elle émet. Le positionnement en position mesure de la pièce 2 est assuré au moyen des pièces de centrage 16 et 18.

L'enceinte peut alors être fermée par dévissage de la vis 56, ce dévissage entraînant le déblocage de la tige 10 effectué grâce à la force de rappel de la lame de ressort 74.

La source est ensuite introduite dans la pièce creuse par poussée sur la tige 62 sur laquelle est fixée la tige 10. L'introduction de la source dans la pièce se fait par l'ouverture 5. Cette ouverture peut être très petite de l'ordre de 5 mm puisque dans le cas d'une source cylindrique le diamètre de celle-ci peut être d'environ 2 à 3 mm et le diamètre de la tige 10 de 3 à 5 mm. Par ailleurs, étant donné que la longueur de la source peut être comprise entre 5 et 10 mm, le contrôle peut avoir lieu pour des pièces creuses dont la cavité est profonde de quelques dizaines de mm.

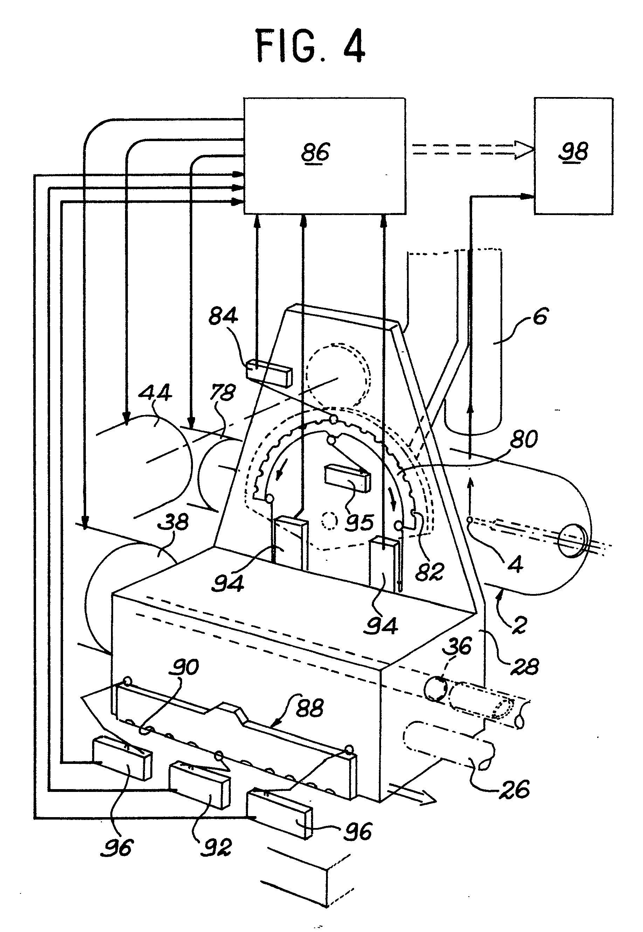

Dans le cas d'une pièce comprenant deux parties extrêmes sphériques et une partie cylindrique centrale, comme représenté sur les figures, la source est placée dans l'axe de la pièce. Elle est tout d'abord maintenue en position fixe au centre d'une des parties sphériques et le détecteur peut être déplacé en face de cette partie sphérique en suivant un arc de cercle centré sur la source par l'intermédiaire du secteur denté 40 et du pignon 42 mis en rotation par le motoréducteur 44. Un secteur crénelé 80 (figure 4) permet d'obtenir une rotation pas à pas, le pas étant fonction de la distance séparant deux créneaux 82 dudit secteur. L'arrêt du motoréducteur 44 est commandé par un interrupteur 84 monté sur le chariot 28, lorsque cet interrupteur est en vis-à-vis d'un créneau. Un système de commande 86 assure alors la mise en œuvre d'un programme de mesure, puis la mise en marche du motoréducteur 44.

Lorsque le détecteur arrive au niveau de la partie centrale cylindrique de la pièce un interrupteur de fin de course 95 commande l'arrêt du motoréducteur 44 et un interrupteur de fin de course 96 commande l'entrée en action du motoréducteur 38, entraînant le déplacement du chariot 28 par action sur la tige filetée 36 et l'écrou 34. Le déplacement du chariot 28, celui-ci étant solidaire les deux colonnes de guidage 26 montées sur le bras 24 maintenant la tige 10, permet de déplacer simultanément la source et le détecteur et donc de contrôler toute la partie cylindrique. Le déplacement pas à pas du chariot est assuré au moyen d'une barette crénelée 88, le pas étant défini par la distance séparant deux créneaux 90. L'arrêt du motoréducteur 38 est commandé par un interrupteur 92 monté sur le chariot 28, lorsque cet interrupteur est en vis-à-vis d'un créneau. Le système de commande 86 assure alors la mise en œuvre du programme de mesure puis la mise en marche du motoréducteur 38.

Enfin lorsque la source et le détecteur arrivent au niveau de la deuxième partie sphérique, un autre interrupteur de fin de course 96 commande l'arrêt du motoréducteur 38 et l'interrupteur 95 commande à nouveau l'entrée en action du motoréducteur 44, ce qui permet de contrôler la pièce au niveau de cette deuxième partie sphérique de la manière décrite précédemment. En particulier, la source reste fixe et le déplacement pas à pas du détecteur est assuré par l'intermédiaire de secteur denté 40 et du pignon 42 ainsi que du secteur crénelé 80. Lorsque le contrôle de cette dernière partie sphérique est terminée, un interrupteur de fin de course 94 commande l'arrêt du motoréducteur 44. La source et le détecteur peuvent être ramenés ou non à leur point de départ étant donné le sens de fonctionnement du dispositif de l'invention qui est réversible.

La mise en route d'un motoréducteur 78 ou la rotation d'une poignée 76 permet, en agissant sur la pièce 20, de faire tourner la pièce à contrôler, de façon à recommencer une autre série de mesures. L'existence du secteur crénelé 80 et de la barrette crénelée 88 permet de connaître de façon précise les coordonnées des différentes zones de la pièce que l'on contrôle. Ce secteur et cette barette garantissent la reproductibilité de ces coordonnées, ce qui est essentiel pour le contrôle de pièces dont l'épaisseur de la paroi varie. Les différentes mesures obtenues peuvent par exemple être visualisées sur un enregistreur 98.

Jusqu'à présent, on a envisagé le contrôle d'une pièce en la maintenant dans une position donnée et en déplaçant le détecteur et la source. Bien entendu, le dispositif permet aussi d'effectuer un contrôle de la pièce en maintenant la source et le détecteur fixes et en faisant tourner la pièce par exemple au moyen du motoréducteur 78.

Lorsque toute la pièce a été contrôlée, la source est remise en position 4a par action sur la tige 62. La partie fixe et la partie mobile de l'enceinte peuvent alors être désolidarisées, l'alésage 12 étant simultanément obstrué par le bouchon 70.

Il est à noter que le fonctionnement et l'utilisation du dispositif ont été décrits à partir d'une pièce comportant deux parties sphériques à ses extrémités et une partie centrale cylindrique mais bien entendu, ce dispositif peut être utilisé pour un autre type de pièce creuse présentant, en coupe, une paroi ayant certaines parties en arc de cercle et, certaines autres rectilignes, ladite pièce creuse étant munie d'une ouverture par laquelle peut être introduite la source émettrice de rayonnements gamma.

Des mesures portant sur des pièces en acier creuses et présentant une paroi hémisphérique, ont été effectuées au moyen du procédé et du dispositif de l'invention. L'épaisseur de la paroi de ces pièces était comprise entre 5 et 10 mm.

Ces mesures ont été effectuées au moyen d'une source radioactive de $^{57}$Co d'activité de 1,4 mCi et d'une source radioactive de $^{123m}$Te d'activité de 0,9 mCi avec un détecteur à cristal semiconducteur tel que le tellurure de cadmium (CdTe). Ce type de détecteur présente une résolution et une efficacité suffisantes pour assurer une séparation entre les différentes raies d'émission de la source, étant donné que la mesure doit être effectuée sur une transition d'énergie bien déterminée. En effet, l'épaisseur de paroi que l'on contrôle ne dépend que, pour une distance source-détecteur constante, du coefficient d'absorption μ qui est constante pour un matériau donné et une énergie donnée du rayonnement. Par ailleurs ce type de détecteur fonctionne à température ambiante, ce qui permet une manipulation aisée. Ce détecteur présentait une forme cylindrique dont le diamètre était de 20 mm et la longueur de 100 mm.

Dans le cas d'une source de $^{123m}$Te et d'un détecteur de CdTe la distance source-détecteur était de 160 mm, dans le cas d'une source de $^{57}$Co et d'un détecteur de CdTe la distance était de 170 mm.

Dans de telles conditions opératoires la précision obtenue sur l'épaisseur des parois était voisine de 0,05 mm, ce qui est une précision meilleure que celle obtenue avec les procédés et dispositifs de l'art antérieur.

Afin d'améliorer cette précision il faudrait utiliser des sources radioactives plus puissantes c'est-à-dire ayant une activité de l'ordre de 25 mCi. Par ailleurs, l'utilisation d'un faisceau de photons gamma de faible diamètre permettrait encore d'améliorer la précision de ces mesures. Il est à noter que la réduction du diamètre du faisceau va de paire avec l'augmentation de l'activité de la source.

Ces améliorations permettraient d'obtenir une précision supérieure à 0,05 mm pour des pièces de 5 à 10 mm d'épaisseur.

Il est de plus à noter que le choix de la source et de son activité dépendent de la nature de la pièce à contrôler ainsi que de la gamme dans laquelle varie l'épaisseur de sa paroi. Le remplacement d'une source par une autre est facilement réalisable étant donné que le bloc blindé dans lequel la source est montée est facilement démontable.

Par ailleurs, la distance entre la source et le détecteur, pour une même pièce à contrôler peut être modifiée (vis 46) en fonction de la décroissance radioactive de la source.

**Revendications**

1. Dispositif pour la détermination de façon non destructive de l'épaisseur de la paroi d'une pièce creuse, comprenant des moyens (16, 18, 20, 21, 22) permettant le maintien et le positionnement de la pièce (2), une source (4) étant introduite à l'intérieur de la pièce de façon à émettre un rayonnement en direction de la surface interne (2a) de la paroi de cette pièce (2), un détecteur (6) étant placé à l'extérieur de la pièce de façon à détecter le rayonnement susceptible de traverser la paroi de ladite pièce et des moyens de déplacement (10, 24, 26, 28, 34, 36, 38, 40, 42, 44) permettant de réaliser un déplacement relatif entre l'ensemble, constitué de la source (4) et du détecteur (6) de rayonnement, et la pièce (2) de façon à suivre le profil de la paroi de la pièce (2), caractérisé en ce que le rayonnement est un rayonnement gamma et en ce que, la pièce (2) à contrôler présentant en coupe une paroi ayant une première partie en arc de cercle, la source (4) est maintenue au centre de cet arc de cercle et les moyens de déplacement (40, 42, 44) comprennent des moyens permettant de déplacer le détecteur (6) suivant un arc de cercle de plus grand rayon centré sur la source (4).

2. Dispositif selon la revendication 1, caractérisé en ce qu'il comprend, de plus, des moyens (46) permettant de fixer la distance entre le détecteur (6) et la source (4), cette distance restant constante pendant tout le déplacement.

3. Dispositif selon l'une quelconque des revendications 1 et 2, caractérisé en ce que la source (4) est montée à l'extrémité d'une tige (10) mobile parallèlement à elle-même et, la paroi de la pièce (2) à contrôler présentant par ailleurs en coupe, une seconde partie rectiligne, parallèle à ladite tige, les moyens de déplacement comprennent des moyens (24, 26, 28, 34, 36, 38) permettant de déplacer simultanément la source (4) et le détecteur (6) parallèlement à ladite partie rectiligne.

4. Dispositif selon la revendication 3, caractérisé en ce que la tige (10) à l'extrémité de laquelle la source est montée peut être déplacée entre une position de mesure (4) et une position rétractée (4a) et en ce qu'un support (32) de détecteur (6) et des moyens permettant de solidariser automatiquement ce support (32) et la tige (10) lorsque celle-ci est en position de mesure sont prévus.

5. Dispositif selon l'une quelconque des revendications 3 et 4, caractérisé en ce que la tige (10) est montée coulissante dans un alésage (12) formé dans un bloc blindé (14) fixe, muni d'un système de blindage (70) permettant d'obstruer l'alésage (12) dudit bloc (14), lorsque la tige (10) est en position rétractée (4a).

6. Dispositif selon l'une quelconque des revendications 1 à 5, caractérisé en ce que les moyens de déplacement permettent d'effectuer un mouvement relatif entre ledit ensemble (4, 6) et la pièce (2) de façon que le rayonnement détecté soit constamment normal à la paroi de la pièce (2).

7. Dispositif selon l'une quelconque des revendications 1 à 6, caractérisé en ce que les moyens (16, 18, 20, 21, 22) permettant le maintien et le positionnement de la pièce (2), sont constitués d'une partie (16) fixée sur le bloc blindé (14) et d'une partie mobile (18, 20, 21, 22), ces deux parties étant situées de part et d'autre de la pièce (2) à contrôler, la partie mobile étant reliée à des moyens permettant de faire tourner la pièce à contrôler (76, 78).

8. Dispositif selon l'une quelconque des revendications 1 à 7, caractérisé en ce qu'il comprend une enceinte (50) de protection constituée de deux parties (50a, 50b) dont l'une (50b) est démontable.

9. Dispositif selon l'une quelconque des revendications 1 à 8, caractérisé en ce que le détecteur (6) est un cristal de tellurure de cadmium.

10. Dispositif selon l'une quelconque des revendications 1 à 9, caractérisé en ce qu'il comprend, aussi, entre le détecteur (6) et la pièce à contrôler (2) un dispositif (8) permettant de collimater le rayonnement gamma susceptible de traverser la paroi de ladite pièce (2).

11. Dispositif selon l'une quelconque des revendications 1 à 10, caractérisé en ce qu'il comprend, encore, des moyens (80, 84, 86, 88, 90, 92, 94, 95, 96) permettant de commander de façon automatique les moyens permettant de réaliser le déplacement relatif entre ledit ensemble et la pièce (2) à contrôler, ce déplacement étant réalisé pas à pas.

**Claims**

1. Apparatus for the non-destructive testing of the wall thickness of a hollow body, comprising means (16, 18, 20, 21, 22) for holding and positioning the body (2), a radiation source (4) being introducible into the interior of the body to emit radiation towards the inner surface (2a) of the wall of said body (2), a detector (6) being located outside the body to detect radiation passing through the wall of said body, and displacement means (10, 24, 26, 28, 34, 36, 38, 40, 42, 44) producing relative displacement of the assembly constituted by the radiation source (4) and the detector (6), and of the body (2) whereby to follow the profile of the wall of the body (2), characterised in that the radiation is gamma radiation and in that, the body (2) under test having, in section, a first wall portion in the form of an arc of a circle, the source (4) is held at the centre of said arc of a circle, and the displacement means (40, 42, 44) comprise means permitting displacement of the detector (6) in an arc of a circle of greater radius, centred on the source (4).

2. Apparatus according to Claim 1, characterised in that it additionally comprises means (46) for fixing the distance between the detector (6) and the source (4), said distance remaining constant during the complete displacement.

3. Apparatus according to either of Claims 1 and 2, characterised in that the source (4) is mounted at the end of a rod (10) which is moveable parallel to itself and, the wall of the body (2) under test having in section a second portion which is straight and is parallel to said rod, the displacement means comprises means (24, 26, 28, 34, 36, 38) for simultaneous displacement of the source (4) and the detector (6) parallel to said straight portion.

4. Apparatus according to Claim 3, characterised in that the rod (10) on whose end the source is mounted, is displaceable between a measurement position (4) and a retracted position (4a), and in that means are provided for automatically fixing the support (32) and the rod (10) in the measurement position.

5. Apparatus according to either of Claims 3 and 4, characterised in that the rod (10) is slideably mounted in a bore (12) formed in a screened fixed block (14), having a screening system (70) for obstructing the bore (12) of said block (14) when the rod (10) in the retracted position (4a).

6. Apparatus according to any one of Claims 1 to 5, characterised in that the displacing means provide relative movement between said assembly (4, 6) and the body (2) whereby the detected radiation remains constantly normal to the wall of the body (2).

7. Apparatus according to any one of Claims 1 to 6, characterised in that the means (16, 18, 20, 21, 22) for maintaining the positioning of the body (2), are constituted by a member (16) fixed on the screened block (14) and a moveable member (18, 20, 21, 22), said two members being located on either side of the piece (2) under test, the moveable member being connected to means for rotating the body (76, 78) under test.

8. Apparatus according to any one of Claims 1 to 7, characterised in that it comprises a protective casing (50) constituted by two members (50a, 50b), one of which (50b) is removeable.

9. Apparatus according to any one of Claims 1 to 8, characterised in that the detector (6) is a crystal of cadmium telluride.

10. Apparatus according to any one of Claims 1 to 9, characterised in that it additionally comprises, between the detector (6) and the body (2) under test, an apparatus for collimation of gamma radiation passing through the wall of said body (2).

11. Apparatus according to any one of Claims 1 to 10, characterised in that it additionally comprises means (80, 84, 86, 88, 90, 92, 94, 95, 96) for automatically controlling the means for producing relative displacement between the assembly and the body (2) under test, said displacement being step-wise displacement.

**Patentansprüche**

1. Vorrichtung zur zerstörungsfreien Messung der Wanddicke eines hohlen Teils mit Mitteln (16, 18, 20, 21, 22) zum Halten und Positionieren des Teils (2), einer in das Innere des Teils derart eingebrachten Quelle (4), daß in Richtung der inneren Oberfläche (2a) der Wand dieses Teils (2) eine Strahlung ausgesandt wird, einer Erfassungseinrichtung (6), die außerhalb des Teils derart angeordnet ist, daß Strahlung, die die Wand des Teils durchdringen kann, erfaßbar ist, und Verschiebemitteln (10, 24, 26, 28, 34, 36, 38, 40, 42, 44), die eine relative Verschiebung aus der von der Strahlungsquelle (4) und der Strahlungserfassungseinrichtung (6) gebildeten Einheit und dem Teil (2), dem Profil der Wand des Teils folgend, ermöglichen, dadurch gekennzeichnet, daß die Strahlung eine Gammastrahlung ist und daß das zu untersuchende Teil (2) im Schnitt eine Wand aufweist, die einen ersten kreisbogenförmigen Abschnitt hat, daß die Quelle (4) in der Mitte dieses Kreisbogens aufrechterhalten ist und daß die Verschiebemittel (40, 42, 44) Mittel zum Verschieben der Erfassungseinrichtung (6) längs eines Kreisbogens mit größerem Radius aufweisen, der in der Quelle (4) zentriert ist.

2. Vorrichtung nach Anspruch 1, dadurch gekennzeichnet, daß ferner Mittel (46) vorgesehen sind, mit denen der Abstand zwischen der Erfassungseinrichtung (6) und der Quelle (4) festlegbar ist, wobei dieser Abstand während der gesamten Verschiebung konstant bleibt.

3. Vorrichtung nach Anspruch 1 oder 2, dadurch gekennzeichnet, daß die Quelle (4) am Ende einer Stange (10) befestigt ist, die parallel zu sich selbst bewegbar ist, daß die Wand des zu untersuchenden Teils (2) im Schnitt außerdem einen zweiten geradlinigen, zu der Stange parallelen Abschnitt aufweist, und daß die Verschiebungsmittel Mittel (24, 26, 28, 34, 36, 38) umfassen, mit denen gleichzeitig die Quelle (4) und die Erfassungseinrichtung (6) parallel zu dem geradlinigen Abschnitt verschiebbar sind.

4. Vorrichtung nach Anspruch 3, dadurch gekennzeichnet, daß die Stange (10), an deren Ende die Quelle befestigt ist, zwischen einer Meßposition (4) und einer zurückgezogenen Position (4a) verschiebbar ist, und daß eine Halterung (32) für die Erfassungseinrichtung (6) und Mittel zum automatischen festen Verbinden dieser Halterung (32) und der Stange (10) vorgesehen sind, wenn sich diese in der Meßstellung befindet.

5. Vorrichtung nach Anspruch 3 oder 4, dadurch gekennzeichnet, daß die Stange (10) verschiebbar in einer Bohrung (12) angebracht ist, die in einem festen, gekapselten Block (14) ausgebildet ist, der mit einem Abschirmungssystem (70) versehen ist, durch welches die Bohrung (12) des Blockes (14) versperrbar ist, wenn sich die Stange (10) in ihrer zurückgezogenen Position (4a) befindet.

6. Vorrichtung nach einem der Ansprüche 1 bis 5, dadurch gekennzeichnet, daß mit den Verschiebungsmitteln eine relative Bewegung zwischen der Einheit (4, 6) und dem Teil (2) derart durchführbar ist, daß die erfaßte Strahlung fortlaufend normal zu der Wand des Teils (2) ist.

7. Vorrichtung nach einem der Ansprüche 1 bis 6, dadurch gekennzeichnet, daß die Mittel (16, 18, 20, 21, 22), die das Halten und die Positionierung des Teils (2) ermöglichen, von einem an dem gekapselten Block (14) befestigten Teil (16) und einem bewegbaren Teil (18, 20, 21, 22) gebildet sind, wobei diese zwei Teile auf beiden Seiten des zu untersuchenden Teils (2) angeordnet sind und das bewegbare Teil mit Mitteln verbunden ist, die ermöglichen, das zu untersuchende Teil (76, 78) zu drehen.

8. Vorrichtung nach einem der Ansprüche 1 bis 7, dadurch gekennzeichnet, daß sie eine Schutzkammer (50) aufweist, die von zwei Teilen (50a, 50b) gebildet ist, von denen eines (50b) entfernbar ist.

9. Vorrichtung nach einem der Ansprüche 1 bis 8, dadurch gekennzeichnet, daß die Erfassungseinrichtung (6) ein Cadmiumtellurid ist.

10. Vorrichtung nach einem der Ansprüche 1 bis 9, dadurch gekennzeichnet, daß sie ferner zwischen der Erfassungseinrichtung (6) und dem zu untersuchenden Teil (2) eine Vorrichtung (8) umfaßt, mit der die zum Durchgang der Wand des Teils (2) geeignete Gammastrahlung kollimierbar ist.

11. Vorrichtung nach einem der Ansprüche 1 bis 10, dadurch gekennzeichnet, daß sie ferner Mittel (80, 84, 86, 88, 90, 92, 94, 95, 96) umfaßt, mit denen automatisch die Mittel steuerbar sind, die die Durchführung einer relativen Verschiebung zwischen der Einheit und dem zu untersuchenden Teil (2) ermöglichen, wobei diese Verschiebung schrittweise durchführbar ist.

FIG. 1

0 075 517

# FIG. 2

FIG. 3

# FIG. 4